Europäisches Patentamt

(19) European Patent Office

Office européen des brevets

(11) Publication number: **0 021 673**

**A1**

(12) # EUROPEAN PATENT APPLICATION

(21) Application number: **80301892.8**

(22) Date of filing: **06.06.80**

(51) Int. Cl.³: **C 08 F 20/44**
**C 08 F 2/06, C 08 F 4/40**

(30) Priority: **18.06.79 US 49695**

(43) Date of publication of application:
**07.01.81 Bulletin 81/1**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Canterino, Peter John**
**39 Mary Drive**
**Towaco Morris County New Jersey(US)**

(74) Representative: **Cooper, John Anthony**
**Mobil Court 3 Clements Inn**
**London WC2A 2EB(GB)**

(54) **Process for solution polymerization of acrylonitrile.**

(57) A 30-60% solution of acrylonitrile in dimethyl sulfoxide is polymerized using a redox catalyst system of water soluble bisulfite salt and a water soluble persulfate salt.

EP 0 021 673 A1

Croydon Printing Company Ltd.

1

# PROCESS FOR SOLUTION POLYMERIZATION OF ACRYLONITRILE

This invention is directed to a method for polymerizing acrylonitrile in solution at relatively low temperature.

Acrylonitrile has been polymerized in solution, using peroxy or azo catalysts. Such catalysts, however, require polymerization temperatures above 50°C., usually in the range of 85° C. to 130°C.; solution polymerization of acrylonitrile at lower temperatures has not previously been proposed.

This invention provides a process for polymerizing acrylonitrile in which the polymerization is carried out in a solution of from 30 to 60 weight percent acrylonitrile in dimethylsulfoxide in the presence of a redox system catalyst consisting essentially of a combination of a water-soluble bisulfite salt or a water-soluble metabisulfate salt and a water-soluble persulfate salt.

The preferred monomer for use in the process of the present invention is acrylonitrile. It is possible to use mixtures of acrylonitrile with alkyl acrylates or methacrylates which contain at least 80 weight percent, preferably at least 95 weight percent, acrylonitrile. Suitable alkyl acrylates and methacrylates include methyl acrylate and methacrylate, ethyl acrylate and methacrylate, butyl acrylate and methacrylate.

The preferred solvent used for the solution polymerization of this invention is dimethyl sulfoxide. Alternatively, the solvent can be succinonitrile or a mixture of dimethyl sulfoxide and dimethyl sulfone containing at least 50 weight percent dimethyl sulfoxide. The amount of acrylonitrile monomer that is dissolved in the dimethyl sulfoxide will be from 30 percent to 60 percent by weight, based upon the total weight of the solution.

The catalyst used in the process of this invention is an aqueous redox system of (i) a water-soluble bisulfite salt or a water-soluble metabisulfite salt and (ii) a water-soluble persulfate salt. Suitable bisulfites include ammonium bisulfite, potassium bisulfite and sodium bisulfite. The metabisulfites include potassium metabilsulfite and sodium metabisulfite. The persulfates include ammonium persulfate, potassium persulfate, and sodium persulfate.

The amount of redox catalyst used will be from 0.1 weight percent to 2 weight percent based upon monomer and calculated on a dry basis. In practice, the redox catalyst components are introduced as aqueous solutions of 1 to 25 weight percent concentration.

The solution polymerization reaction is generally carried out at temperatures from 40°C. to 80°C., preferably from 40 to 50°C. Generally, the polymerization is completed in 2 hours to 10 hours.

A solution was prepared containing 20 cc. dimethyl sulfoxide, 10 cc. acrylonitrile, 0.5 cc. 2% aqueous solution of sodium bisulfite, and 0.5 cc. 2% aqueous solution of potassium persulfate. This solution was allowed to sit for two hours at 40-50°C. A very viscous solution light in color resulted.

A film cast from the resultant solution and biaxially oriented by the process described in U.S. Patent No. 4,066,731 has properties similar to those described in that patent.

3

WHAT IS CLAIMED IS:

1. A process for polymerizing acrylonitrile in which the polymerization is conducted in a solution comprising from 30 to 60 weight percent acrylonitrile in dimethylsulfoxide in the presence of a redox system catalyst consisting essentially of a combination of a water-soluble bisulfite salt or a water-soluble metabisulfite salt and water-soluble persulfate salt.

2. A process according to Claim 1 in which the water-soluble bisulfite salt is sodium bisulfite.

3. A process according to Claim 1 or 2 in which the water-soluble persulfate salt is potassium persulfate.

4. A process according to any of Claim 1 to 3 in which the solution comprises a polymerizable mixture of acrylonitrile and an alkyl acrylate or methacrylate containing at least 80 weight percent of acrylonitrile.

5. A process according to any of Claims 1 to 4 in which the polymerization is conducted at a temperature of from 40° to 80°C.

6. A process according to Claim 5 in which the polymerization is conducted at a temperature of from 40° to 50°C.

0021673

European Patent Office

**EUROPEAN SEARCH REPORT**

Application number

EP 80 30 1892

## DOCUMENTS CONSIDERED TO BE RELEVANT

| Category | Citation of document with indication, where appropriate, of relevant passages | Relevant to claim |
|---|---|---|
| A | DE - A - 2 327 638 (A. KREKEL) | |
| A | FR - A - 1 394 374 (KODAK) | |
| A | GB - A - 586 796 (I.C.I.) | |
| | ---- | |

**CLASSIFICATION OF THE APPLICATION (Int Cl.³)**

C 08 F 20/44
2/06
4/40

**TECHNICAL FIELDS SEARCHED (Int. Cl.³)**

C 08 F 20/42-
20/50
120/42-
120/50
220/42-
220/50
C 08 F 4/40

—

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 06-10-1980 | CAUWENBERG |

EPO Form 1503.1 06.78